# EUROPEAN PATENT APPLICATION

(11) **EP 3 838 008 A1**
(43) Date of publication of application: **23.06.2021**
(21) Application number: 19219089.0
(22) Date of filing: 20.12.2019
(51) Int. Cl.: A24F 40/40, H02J 7/00

(54) **CHARGING DEVICE AND SMOKING SUBSTITUTE KIT**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

Various embodiments provide a charging device for charging a smoking substitute device, the charging device comprising: a housing having a holder for receiving a smoking substitute device; and a charging assembly for charging the smoking substitute device; wherein the holder is curved along its longitudinal axis.

## Description

### Field of the Invention

The present invention relates to a charging device for a smoking substitute device and a kit including both the charging device and the smoking substitute device.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices include electronic systems that permit a user to simulate the act of smoking by producing an aerosol (also referred to as a "vapour") that is drawn into the lungs through the mouth (inhaled) and then exhaled. The inhaled aerosol typically bears nicotine and/or a flavourant without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and with combustible tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. There are a number of different categories of smoking substitute devices, each utilising a different smoking substitute approach.

One approach is the so-called "vaping" approach, in which a vaporisable liquid, typically referred to (and referred to herein) as "e-liquid", is heated by a heating device (referred to herein as an electronic cigarette or "e-cigarette" device) to produce an aerosol vapour which is inhaled by a user. The e-liquid typically includes a base liquid as well as nicotine and/or a flavourant. The resulting vapour therefore also typically contains nicotine and/or a flavourant. The base liquid may include propylene glycol and/or vegetable glycerine.

A typical e-cigarette device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

E-cigarettes can be configured in a variety of ways. For example, there are "closed system" vaping smoking substitute devices, which typically have a sealed tank and heating element. The tank is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, that consumable is disposed of. The main body can be reused by connecting it to a new, replacement, consumable. Another subset of closed system vaping smoking substitute devices are completely disposable, and intended for one-use only.

There are also "open system" vaping smoking substitute devices which typically have a tank that is configured to be refilled by a user. In this way the entire device can be used multiple times.

An example vaping smoking substitute device is the myblu™ e-cigarette. The myblu™ e-cigarette is a closed system which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heater, which for this device is a heating filament coiled around a portion of a wick. The wick is partially immersed in the e-liquid, and conveys e-liquid from the tank to the heating filament. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Where a smoking substitute device includes a rechargeable power source, such systems can be used in combination with a charging cable or charging device. The charging cable or charging device are connectable to the smoking substitute device to facilitate recharging of the rechargeable power source.

There is a continuing need to improve the manner in which smoking substitute devices with rechargeable power sources are charged, and the devices used for such charging.

The present invention has been devised in light of the above considerations.

### Summary of the Invention

At its most general, the present invention relates to a charging device for charging a smoking substitute device. The charging device comprises a housing having a holder for receiving a smoking substitute device wherein the holder is curved along its longitudinal axis. In this way, the charging device is adapted to ensure that the smoking substitute device is securely held by the charging device. In particular, the curvature of the holder increases the surface area of the holder which is in frictional engagement with a smoking substitute device when the charging device is in use, which helps to ensure that the smoking substitute device is held securely and is at reduced risk of falling out of the holder. In addition, the curvature of the holder helps to ensure that the smoking substitute device is inserted in the correct orientation for a rechargeable power source of the smoking substitute device to be charged by the charging device.

According to a first aspect of the present invention, there is provided a charging device for charging a smoking substitute device, the charging device comprising a housing having a holder for receiving a smoking substitute device; and a charging assembly for charging the smoking substitute device, the charging assembly including a connection interface arranged for connection to the smoking substitute device when the smoking substitute device is received in the holder, wherein the holder is curved along its longitudinal axis. For example, the holder may be an elongate tubular cavity or recess in the housing of the charging device. For the avoidance of doubt, the term 'tubular' may be used herein to refer to an elongate shape having any suitable cross-section.

Optionally, the housing may also be curved along its longitudinal axis. For example, in some embodiments the curvature of the housing may match the curvature of the holder. In this way, the shape of the housing may serve as a visual and/or tactile indicator to a user to indicate how the smoking substitute device should be inserted into the holder. In addition, by providing a housing which is curved along a longitudinal axis the charging device has an ergonomic design which is shaped for a user's hand and which may also be haptically pleasing.

Advantageously, the charging device may further comprise comprising a cover moveably attached to the housing and movable between a closed configuration, in which the cover covers an opening of the holder to form an enclosure around the smoking substitute device when the smoking substitute device is received in the holder, and an open configuration, in which the cover is spaced away from the opening to permit insertion or removal of a smoking substitute device into or out of the holder. In this manner the charging device provides an enclosure for a smoking substitute device such that the smoking substitute device is stored hygienically. The smoking substitute device, and particularly a mouthpiece of the consumable of the smoking substitute device, is shielded from dirt, germs and other undesirable factors in the surrounding environment. The enclosure also protects the smoking substitute device from damage. Furthermore, the cover provides an additional aid to ensure that the smoking substitute device does not fall out of the holder and so maintains engagement with the charging assembly for charging a rechargeable power source of the smoking substitute device. In some embodiments, the charging device may comprise at least one magnetic coupling between the housing and the cover which is operable to hold the cover in the closed configuration. Such a design ensures that the cover automatically latches closed when moved into the closed configuration. Alternatively, the charging device may comprise at least one mechanical coupling between the housing and the cover which is operable to hold the cover in the closed configuration. These may further help to shield the smoking substitute device from the surrounding environment and prevent the smoking substitute device from falling out of the holder when the smoking substitute device is not in use.

Optionally, the connection interface may comprise a pair of charging pins (e.g. pogo pins) for delivering electricity to a smoking substitute device. For example, the charging pins may be provided in addition to or in place of a USB connector. In particular, as USB connector may provide a frictional connection with a smoking substitute device, and this frictional connection may be missing where the charging pins are provided with no USB connector. In such examples, therefore, the curvature of the holder, and the increased frictional engagement with the surface of a smoking substitute device resulting therefrom, ensures that the smoking substitute device is held in place for charging by the charging pins. The curvature and cross-sectional shape of the holder may be particularly advantageous to ensure that the smoking substitute device is correctly engaged with the connection interface, for example where the connection interface is asymmetric and requires a particular relative orientation of the connection interface and the smoking substitute device for proper operation.

Advantageously, at least a portion of an interior surface of the holder may have an anti-slip coating, such as a high friction coating. For example, an interior surface of the holder may have a rough texture to increase frictional engagement with the outer surface of a smoking substitute device. Additional and/or alternatively, at least a portion of an interior surface of the holder may be provided with a rubber coating, and/or an anti-slip paint, for example.

Preferably, a radius of curvature of the holder may be greater than about 900 mm. For example, the radius of curvature of the holder may be less than about 2000 mm. For example, the radius of curvature of the holder may be 1500 mm. In this way the curvature of the holder may provide advantages as described above, such as ensuring that a smoking substitute device is securely held within the holder and is inserted in the correct orientation to allow charging, in a manner which ensures that it is not difficult to insert the smoking substitute device into the charging case. In addition, in embodiments where the curvature of the holder matches the curvature of the substitute smoking device, the radius of curvature may be particularly ergonomic such that the smoking substitute device is shaped for a user's hand and is haptically pleasing to hold.

Advantageously, the holder has a generally oval cross-sectional shape perpendicular to the longitudinal axis. Such a shape may further help to ensure that a smoking substitute device is properly positioned relative to the charging assembly when inserted in the charging case, in particular about a longitudinal axis as the oval shape may ensure that the smoking substitute device is static about the longitudinal axis. For example, the shape of the holder may for example substantially match a cross-sectional shape of a main body of the smoking substitute device

Preferably, the charging device is a portable charging case, such that a user is able to take the charging device with them in order to charge a smoking substitute device whenever it is required.

According to another aspect of the present invention, there is provided a smoking substitute kit comprising: a charging device according to the first aspect; and a smoking substitute device.

Optionally, the smoking substitute device is longer than the holder such that, when the smoking substitute device is inserted into the holder, a portion of the smoking substitute device protrudes from the charging device, and wherein the smoking substitute device is operable for vapour generation when the smoking substitute device is inserted into the holder. It is to be understood that the smoking substitute device includes a main body with or without a consumable. Therefore, a depth of the holder may be slightly less than a length of the main body (e.g. by 3mm or so), such that an end of the main body protrudes from the holder and, when a consumable is attached to the main body, an end of the consumable protrudes from the holder. In this way, the consumable and the main body may be separately manually removed from the holder.

The connection interface (e.g. an electrical connector) may be disposed in the holder and arranged for connection to the main body of the smoking substitute device when the main body is received in the holder. In this manner, when the main body of the smoking substitute device is received in the holder, it may be connected to the charging assembly (including charging/control circuitry and a first battery) via the connection interface, so that a battery (aka second battery) in the main body may be recharged by the charging/control circuitry and the first battery.

The connection interface may be arranged to connect to a corresponding connector on the main body of the smoking substitute device, to form an electrical connection (and, possibly, mechanical connection) between the charging assembly and the main body. For example, the connection interface may include a plug that is arranged to engage a corresponding socket on the main body (or vice versa) when the main body is received in the holder. Alternatively, the connection interface may include one or more (e.g. two) charging pins that are arranged to contact one or more (e.g. two) contact pads on the main body (or vice versa). The connection interface is disposed in the holder. In this manner, when the main body is inserted into the holder, the connection interface may engage the connector on the main body to form an electrical connection. Providing the connection interface in the holder may further serve to protect the connection interface, and avoid its coming into contact with a user.

The connection interface may be a universal serial bus (USB) interface (e.g. USB-C). In this manner, a main body having a USB connector may be charged by the charging device. A USB-C interface does not have different "up" and "down" orientations (i.e. it is a symmetrical connector), which may facilitate connecting the main body to the connection interface. In some other embodiments, however, an asymmetrical connector may be used instead, for example, a micro-USB connector. In this case, an outer surface of the housing may include a visual indicator signifying an orientation of the smoking substitute device necessary for the asymmetric electrical connector to engage with the smoking substitute device when the smoking substitute device is received in the holder. Conveniently, the visual indicator is a marking signifying a required location of a front or a back of the smoking substitute device as the smoking substitute device is inserted into the holder. In another embodiment, the connection interface may include two connection pins (e.g. pogo pins) which are arranged to contact two cooperating contact pads on the main body when the main body is inserted into the holder. This type of two pin connector may be symmetric (i.e. either pin may contact either pad) or asymmetric (i.e. one pin must contact a specific one of pads, and the other pin must contact the other one of the pads). As discussed above, the curvature of the holder may also ensure that the smoking substitute device is inserted in the correct orientation for proper connection to the connection interface,

The holder may be formed as a cavity or recess in the housing and have a shape that is complementary to a shape of the smoking substitute device (or at least a shape of its main body). A shape of the cavity may for example substantially match a cross-sectional shape of the main body of the smoking substitute device, for example the main body and the holder may have a generally oval cross-section. In some embodiments, the smoking substitute device may have a curvature along its longitudinal axis which matches the curvature of the holder. For example, the cavity may be arranged to form an interference fit with the main body. This may ensure that the main body is securely held in the cavity. This may also ensure that only devices that are intended for use with the charging device may be inserted into the cavity, to prevent misuse of the charging device. This may also serve to avoid a user putting their finger into the cavity, where it may come into contact with (and damage) the connection interface. In an embodiment, the connection interface may be positioned in a base of the cavity. In an embodiment, the cavity may be integrally formed as part of the housing, which may facilitate construction of the housing. For example, the housing may be formed as a single piece of moulded or 3D-printed plastic.

The charging device may include a cable for connecting the charging assembly to an external power source (e.g. a laptop, or a mains supply), wherein the charging assembly is operable to control charging of the first battery (i.e. the battery of the charging assembly) from the external power source when the charging assembly is connected to the external power source. In this manner, the cable can be used to charge the first battery, for example, once it has become empty due to charging the second battery of the smoking substitute device. Also, the charging device can be used to charge the smoking substitute device on-the-move, i.e. without needing to be attached to an external power source. In some cases, the cable may be removably connectable from the charging assembly, so that it may be disconnected from the charging device when not in use. For example, the charging assembly may include a second connection interface, such as a plug or socket, for connecting the cable. The cable may be a USB cable, and the charging device may include a USB connector (e.g. a USB female socket or a USB male plug) which is electrically coupled to the charging assembly. The second connection interface may be positioned in an outer surface of the housing, for example, a base portion of the housing.

The charging device may further include a charge indicator for indicating a charging status of a main body received in the holder. In this manner, a user may be informed of the charging status of the main body. Herein, a charging status may be an indication that a main body received in the holder is being charged, or that it is fully charged. For example, the charge indicator may be an indicator light which is arranged to indicate the charging status. The indicator light may indicate via a blinking pattern of the indicator light (e.g. blinking means charging, no blinking means charged), or via a colour of the indicator light (e.g. red means charging, blue means charged). Other types of charge indicator are also contemplated, such as a display or the like. Additionally, the charging indicator, or a second charging indicator, may be configured to indicate a charging status of the charging device when it is connected to the external power supply. The charging device may be a charge case in which the holder is a cavity which is sized so as to receive a majority or an entirety of the main body of the smoking substitute device. For example, the cavity has a depth between 80mm and 100mm, and preferably between 85mm and 95mm, and more preferably between 87mm and 93mm, and still more preferably between 89mm and 91mm. Conveniently, the cavity has a depth of about 90mm.

It is to be understood that the smoking substitute device may be used (e.g. to generate vapour for inhalation) whilst it is connected to and being charged by the charging device. In this scenario, the smoking substitute device includes a main body and a consumable.

The smoking substitute device may include a main body and a consumable, the consumable being engageable with the main body. The main body may have an engagement end which is engageable with the consumable, the engagement end being on an opposite end of the main body relative to an end portion which includes a connector that is arranged to engage the connection interface of the charging device when the main body is received in a holder of the charging device.

The holder of the charging device may have a shape that is complementary to a shape of the main body, e.g. so that an interference fit may be formed between the holder and the main body when the main body is received in the holder.

The consumable is configured for engagement with the main body (e.g. so as to form a closed smoking substitute device). The consumable may also be referred to as a "cartridge" or "pod" for the smoking substitute device. For example, the consumable may comprise components of the system that are disposable, and the main body may comprise non-disposable or non-consumable components (e.g. power supply, controller, sensor, etc.) that facilitate the delivery of aerosol by the consumable. In such an embodiment, an aerosol former (e.g. e-liquid) may be replenished by replacing a used consumable with an unused consumable.

Alternatively, the consumable may be reusable. In such embodiments an aerosol former (e.g. e-liquid) of the consumable may be replenished by re-filling e.g. a reservoir of the consumable with the aerosol former (rather than replacing a consumable component of the apparatus).

In light of this, it should be appreciated that some of the features described herein as being part of the consumable may alternatively form part of a main body.

The main body and the consumable may be configured to be physically coupled together. For example, the consumable may be at least partially received in a recess of the main body, such that there is an interference fit between the main body and the consumable. Alternatively, the main body and the consumable may be physically coupled together by screwing one onto the other, or through a bayonet fitting.

Thus, the consumable and main body may comprise one or more engagement portions for engagement with one another. In this way, one end of the consumable may be coupled with the main body, whilst an opposing end of the consumable may define a mouthpiece of the smoking substitute device.

The smoking consumable may comprise a reservoir configured to store an aerosol former, such as an e-liquid. The e-liquid may, for example, comprise a base liquid and e.g. nicotine. The base liquid may include propylene glycol and/or vegetable glycerine. The e-liquid may also contain a flavourant, to provide a flavour to the user.

The reservoir may be in the form of a tank. At least a portion of the tank may be translucent. For example, the tank may comprise a window to allow a user to visually assess the quantity of e-liquid in the tank. A housing of the main body may comprise a corresponding aperture (or slot) or window that may be aligned with a translucent portion (e.g. window) of the tank. The reservoir may be referred to as a "clearomizer" if it includes a window, or a "cartomizer" if it does not.

The consumable may comprise a passage for fluid flow therethrough. The passage may extend through (at least a portion of) the consumable, between openings that may define an inlet and an outlet of the passage. The outlet may be at a mouthpiece of the consumable. In this respect, a user may draw fluid (e.g. air) into and through the passage by inhaling at the outlet (i.e. using the mouthpiece). The passage may be at least partially defined by the tank. The tank may substantially (or fully) define the passage. In this respect, the tank may surround the passage.

The consumable may comprise an aerosol-generator. The aerosol generator may comprise a wick. The aerosol generator may further comprise a heater. The wick may comprise a porous material. A portion of the wick may be exposed to fluid flow in the passage. The wick may also comprise one or more portions in contact with liquid stored in the reservoir. For example, opposing ends of the wick may protrude into the reservoir and a central portion (between the ends) may extend across the passage so as to be exposed to fluid flow in the passage. Thus, fluid may be drawn (e.g. by capillary action) along the wick, from the reservoir to the exposed portion of the wick.

The heater may comprise a heating element, which may be in the form of a filament wound about the wick (e.g. the filament may extend helically about the wick). The filament may be wound about the exposed portion of the wick. The heating element may be electrically connected (or connectable) to a power source (e.g. a battery). Thus, in operation, the power source may supply electricity to (i.e. apply a voltage across) the heating element so as to heat the heating element. This may cause liquid stored in the wick (i.e. drawn from the tank) to be heated so as to form a vapour and become entrained in fluid flowing through the passage. This vapour may subsequently cool to form an aerosol in the passage.

The main body may comprise the second battery (e.g. a rechargeable battery or Li-ion battery). The second battery is arranged to power the smoking substitute device, for example, so that the smoking substitute device can generate vapour for inhalation by a user. The second battery may be electrically connected (or connectable) to a heater of the smoking substitute device (e.g. when engaged with the main body). A connector (e.g. in the form of a USB connector) may be provided on the end portion of the main body for recharging this battery via engagement with the connection interface in the holder of the charging device.

The consumable may comprise an electrical interface for interfacing with a corresponding electrical interface of the main body. One or both of the electrical interfaces may include one or more electrical contacts. Thus, when the main body is engaged with the consumable, the electrical interface may be configured to transfer electrical power from the power source to a heater of the consumable.

The electrical interface may also be used to identify the consumable from a list of known types. For example, the consumable may have a certain concentration of nicotine and the electrical interface may be used to identify this. The electrical interface may additionally or alternatively be used to identify when a consumable is connected to the main body.

The main body may comprise an interface, which may, for example, be in the form of an RFID reader, a barcode or QR code reader. This interface may be able to identify a characteristic (e.g. a type) of a consumable engaged with the main body. In this respect, the consumable may include any one or more of an RFID chip, a barcode or QR code, or memory within which is an identifier and which can be interrogated via the interface.

The main body may comprise a controller, which may include a microprocessor. The controller may be configured to control the supply of power from the power source to the heater of the smoking substitute apparatus (e.g. via the electrical contacts). A memory may be provided and may be operatively connected to the controller. The memory may include non-volatile memory. The memory may include instructions which, when implemented, cause the controller to perform certain tasks or steps of a method.

The main body may comprise a wireless interface, which may be configured to communicate wirelessly with another device, for example a mobile device, e.g. via Bluetooth®. To this end, the wireless interface could include a Bluetooth® antenna. Other wireless communication interfaces, e.g. WiFi®, are also possible. The wireless interface may also be configured to communicate wirelessly with a remote server.

A puff sensor may be provided that is configured to detect a puff (i.e. inhalation from a user). The puff sensor may be operatively connected to the controller so as to be able to provide a signal to the controller that is indicative of a puff state (i.e. puffing or not puffing). The puff sensor may, for example, be in the form of a pressure sensor or an acoustic sensor. That is, the controller may control power supplied to the heater of the consumable in response to a puff detection by the sensor. The control may be in the form of activation of the heater in response to a detected puff. That is, the smoking substitute device may be configured to be activated when a puff is detected by the puff sensor. The puff sensor may form part of the consumable or the main body.

The invention includes the combination of the aspects and preferred features described except where such a combination is clearly impermissible or expressly avoided.

### Summary of the Figures

So that the invention may be understood, and so that further aspects and features thereof may be appreciated, embodiments illustrating the principles of the invention will now be discussed in further detail with reference to the accompanying figures, in which:
Figure 1A is a schematic side view of a smoking substitute device that may be used with a charging device according to an embodiment of the invention, where the smoking substitute device is in an engaged position;
Figure 1B is a schematic side view of the smoking substitute device of Figure 1A, where the smoking substitute device is in a disengaged position;
Figure 1C is a schematic end view of the smoking substitute device of Figure 1A;
Figure 1D is a cross-sectional diagram of a consumable of the smoking substitute device of Figure 1A;
Figure 2A is an isometric view of a charging device, in accordance with an embodiment of the invention, containing a smoking substitute device and with a cover of the charging device in a closed configuration;
Figure 2B is an isometric view of charging device, in accordance with an embodiment of the invention, containing a smoking substitute device and with the cover of the charging device in an open configuration; and
Figures 3 shows a cross-section view of a charging device in accordance with an embodiment of the invention.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

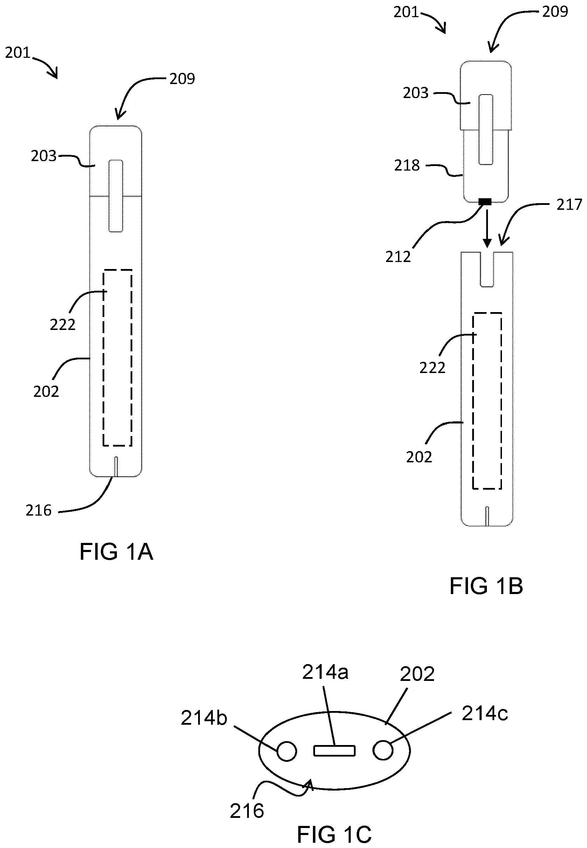

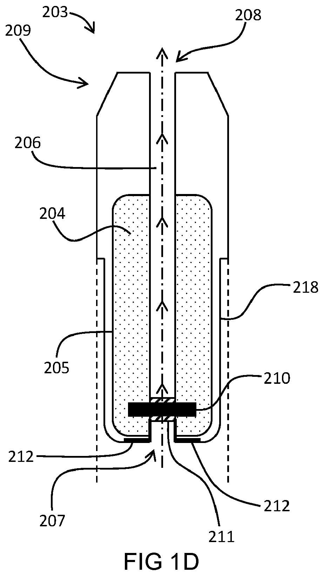

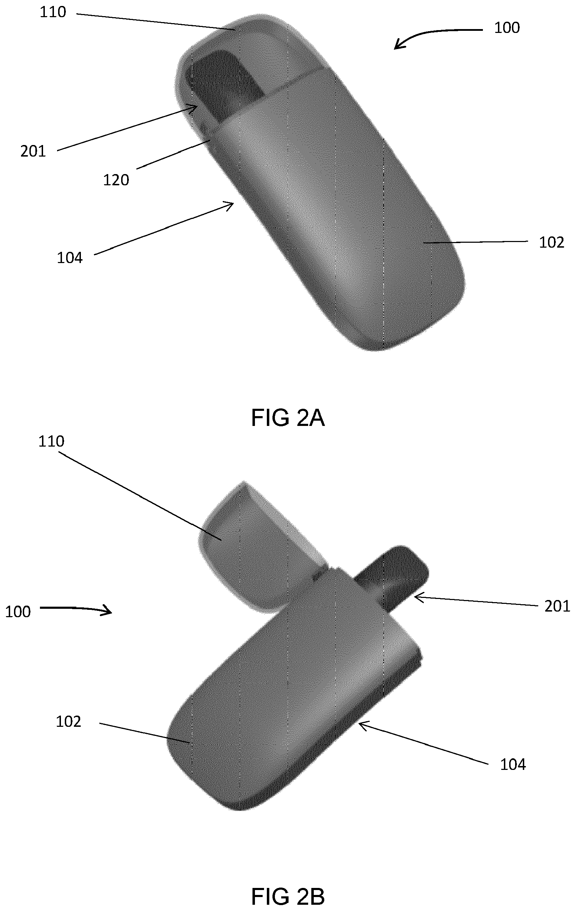

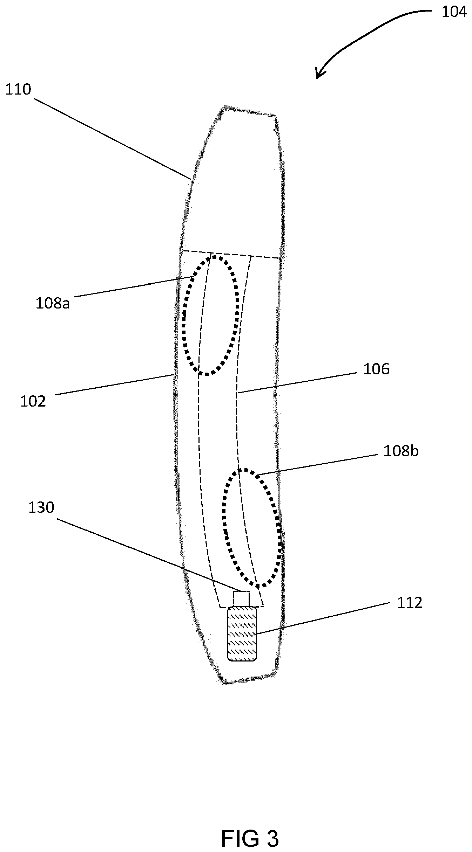

Figures 1A, 1B, 1C and 1D illustrate a smoking substitute device 201. The device 201 may, for example, be used with the charging device 104 of Figures 2A, 2B and 3 as described below. In an embodiment, the smoking substitute device 201 is an electronic cigarette or a vaping device.

The device 201 comprises a main body 202, and a consumable (or "pod") 203. In the illustrated embodiment the consumable 203 is removable from the main body 202, so as to be a replaceable component of the device 201. In other words, the device 201 is a closed system. A cross-sectional view of the consumable 203 is shown in Figure 1D. Although it is not shown in the figures, the device 201 is curved along its longitudinal axis. As shown in Fig. 1C, the device 201 has a generally oval cross-section, although it will be appreciated that the device 201 may have any suitable cross-sectional shape.

As is apparent from Figures 1A and 1B, the consumable 203 is configured to engage the main body 202. The main body 202 includes an engagement portion 217, which is in the form of a cavity disposed at a first end of the main body 202. The engagement portion 217 of the main body 202 is arranged to engage an engagement portion 218 on the consumable 203. Figure 1A shows the main body 202 and the consumable 203 in an engaged state, whilst Figure 1B shows the main body 202 and the consumable 203 in a disengaged state. When engaged, the engagement portion 218 of the consumable 203 is received in the cavity of the engagement portion 217 of the main body 202, and is retained in the engaged position by way of a snap-engagement mechanism. In other embodiments, the main body 202 and consumable 203 may be engaged by screwing one into (or onto) the other, through a bayonet fitting, or by way of an interference fit.

The device 201 is configured to vaporise an aerosol-former, which in the illustrated embodiment, is in the form of a nicotine-based e-liquid 204. The e-liquid 204 comprises nicotine and a base liquid including propylene glycol and/or vegetable glycerine. The e-liquid 204 may also comprise a flavourant, for producing a flavoured aerosol.

As is more apparent from Figure 1D, the e-liquid 204 is stored within a reservoir in the form of a tank 205 that forms part of the consumable 203. In the illustrated embodiment, the consumable 203 is a "single-use" consumable 203. That is, upon exhausting the e-liquid 204 in the tank 205, the intention is that the user disposes of the entire consumable 203. In other embodiments, the e-liquid (i.e. aerosol former) may be the only part of the system that is truly "single-use". That is, the tank may be refillable with e-liquid or the e-liquid may be stored in a non-consumable component of the system. For example, the e-liquid may be stored in a tank located in the main body or stored in another component that is itself not single-use (e.g. a refillable cartomizer).

The tank 205 surrounds, and thus defines a portion of, a passage 206 that extends between an inlet 207 and an outlet 208 at opposing ends of the consumable 203. In this respect, the passage comprises an upstream end at the end of the consumable 203 that engages with the main body 202, and a downstream end at an opposing end of the consumable 203 that comprises a mouthpiece 209 of the device 201. When the consumable 203 is engaged with the main body 202, a user can inhale (i.e. take a puff) via the mouthpiece 209 so as to draw air through the passage 206, and so as to form an airflow (indicated by arrows) in a direction from the inlet 207 to the outlet 208 of the passage 206. Although not illustrated, the passage 206 may be partially defined by a tube (e.g. a metal tube) extending through the consumable 203. The passage 206 is in fluid communication with a gap defined between the consumable 203 and the main body 202 (when engaged) such that air outside of the device 201 is drawn into the passage 206 (during an inhale).

The smoking substitute device 201 is configured to vaporise the e-liquid 204 for inhalation by a user. To provide this, the consumable 203 comprises a heater having of a porous wick 210 and a resistive heating element in the form of a heating filament 211 that is helically wound around a portion of the porous wick 210. The porous wick 210 extends across the passage 206 (i.e. transverse to a longitudinal axis of the passage 206) and opposing ends of the wick 210 extend into the tank 205 (so as to be submerged in the e-liquid 204). In this way, e-liquid 204 contained in the tank 205 is conveyed from the opposing ends of the porous wick 210 to a central portion of the porous wick 210 so as to be exposed to the airflow in the passage 206 (i.e. caused by a user inhaling).

The helical filament 211 is wound about this exposed central portion of the porous wick 210 and is electrically connected to an electrical interface in the form of electrical contacts 212 mounted at the end of the consumable that is proximate the main body 202 (when engaged). When the consumable 203 is engaged with the main body 202, the electrical contacts 212 contact corresponding electrical contacts (not shown) of the main body 202. The main body electrical contacts are electrically connected to a power source 222 of the main body 202, such that (in the engaged position) the filament 211 is electrically connected to the power source. In this way, power can be supplied by the main body 202 to the filament 211 in order to heat the filament 211. This heat is transferred from the filament 211 to the porous wick 210 which causes e-liquid 204 conveyed by the porous wick 210 to increase in temperature to a point at which it vaporises. The vaporised e-liquid becomes entrained in the airflow and, between the vaporisation point at the filament 211 and the outlet 208 of the passage 206, condenses to form an aerosol. This aerosol is then inhaled, via the mouthpiece 209, by a user of the device 201.

The power source of the main body 202 may be in the form of a battery 222 (i.e. the second battery; e.g. a rechargeable battery). As is more apparent from Figure 1C, the main body 202 includes one or more connectors 214a-c in the form of e.g. a USB or USB-C port for recharging the battery (e.g. 214a), and/or two contact pads (e.g. 214b and 214c). The connectors 214a-c are disposed on an end face 216 of the main body 202, which is at second end of the main body 202, opposite the first end comprising the engagement portion 217. The connectors 214a-c are arranged to engage a corresponding connection interface in a charging device to recharge the battery 222. It is to be understood that in one embodiment, only the connector 214a is present and, in another embodiment, only the connectors 214b and 214c are present.

The main body 202 may also comprise a controller that controls the supply of power from the power source to the main body electrical contacts (and thus to the filament 211). That is, the controller may be configured to control a voltage applied across the main body electrical contacts, and thus the voltage applied across the filament 211. In this way, the filament 211 may only be heated under certain conditions (e.g. during a puff and/or only when the system is in an active state). In this respect, the main body 202 may include a puff sensor (not shown) that is configured to detect a puff (i.e. inhalation). The puff sensor may be operatively connected to the controller so as to be able to provide a signal, to the controller, which is indicative of a puff state (i.e. puffing or not puffing). The puff sensor may, for example, be in the form of a pressure sensor or an acoustic sensor.

Figure 2A shows smoking substitute kit 100 including a charging device 104 in a closed configuration and a smoking substitute device 201. Figure 2B shows a smoking substitute kit 100 including the charging device 104 in an open configuration and a smoking substitute device 201. To aid clear understanding of the following description, it will be assumed that the charging device 104 is used with the smoking substitute device 201 of Figures 1A to 1D. However, it is to be understood that in some other embodiments, the charging device 104 can be used with a different smoking substitute device.

In the embodiment of Figure 2A, the charging device 104 takes the form of a portable charge case. The charging device 104 acts as a case to hold a smoking substitute device and protect it as it is carried around during use. Also, the case acts as a mechanism by which a battery 222 of the smoking substitute device can be charged. The smoking substitute device 201 has a second battery 222 which is operable to power the smoking substitute device, for example, to heat an e-liquid to generate vapour for inhalation by a user. The charging device 104 has a first battery which is operable to charge the second battery 222 of the smoking substitute device 201 when the charging device 104 is connected to the smoking substitute device 201.

The charging device 104 may include a housing 102 having a holder 106 in the form of a cavity or recess for receiving the main body 202 of the smoking substitute device 201. In particular, a cross-sectional shape of the main body 202 may correspond to a shape of the holder 106, so that an interference fit may be formed when the main body 202 is inserted into the holder 106. In particular, as discussed in more detail below, the holder 106 is curved along its longitudinal axis and may have a general oval cross section corresponding to the cross-sectional shape of the main body 202. The connectors 214a-c (Figure 1C) on the end face 216 are arranged to engage a corresponding connection interface 130 disposed in the holder 106 when the main body 202 is received in the holder 106. In this manner, when the main body 202 is received in the holder 106 of the charging device 104, the main body 202 may be connected to the charging device via the connectors 214a-c on its end face 216, so that the battery in the main body 202 may be recharged. In one embodiment, the charge case 104 includes only a male connector, such as a USB plug, which cooperates with a connector 214a (e.g. a female connector, such as a female USB socket) on the smoking substitute device. In another embodiment, the charge case 104 includes a connection interface 130 comprising only charging pins, such as pogo pins which cooperate with connection pads 214b and 214c on the smoking substitute device. In some examples, the charging pins, such as pogo pins, may form an asymmetrical connector such that one pin must contact as specific one of the pads 214b or 214c, and the other pin must contact the other one of the pads 214b, 214c. In these examples, the curvature of the holder 106 is particularly advantageous for ensuring that a user inserts the smoking substitute device 201 in a correct orientation to be charged by the charging device 104 via the charging pins.

In an embodiment, the holder 106 defines a cavity having a generally tubular cross-section and so defines a generally tubular void. Specifically, the cavity includes a sidewall which terminates in an aperture at one end (e.g. the top end, as shown in Figs. 2A, 2B and 3) and terminates in a base wall at the other end (e.g. the bottom end, Figs. 2A, 2B and 3). Since the cavity receives the smoking substitute device 201, a shape of the cross-section of the cavity accommodates a shape of the cross-section of the smoking substitute device 201. For example, the cavity of the charging device 104 and the main body 202 of the smoking substitute device 201 may both have a generally oval shaped cross-section, wherein the respective sizes of the two ovals are such that the main body 202 fits within the cavity. That is, the oval of the main body 202 may have the same shape but a slightly reduced area compared to the oval of the cavity. The oval shape may be truncated at each end along its maximum diameter. In an embodiment, the maximum and minimum widths of the oval shape of the main body 202 may be about 20mm and about 12mm, respectively, whereas the maximum and minimum widths of the oval shape of the cavity may be about 22mm and about 14mm, respectively.

Additionally, in an embodiment, the cavity has a depth which corresponds with a length of the main body 202 of the smoking substitute device 201. For instance, a depth of the cavity may be approximately equal to a length of the main body 202. For example, if the maximum length of the main body 202 is about 90mm, the cavity may have a maximum depth between 80mm and 100mm (e.g. main body length ±10mm), and preferably between 85mm and 95mm (e.g. main body length ±5mm), and more preferably between 87mm and 93mm (e.g. main body length ±3mm), and still more preferably between 89mm and 91mm (e.g. main body length ±1mm). Alternatively, the cavity may have a maximum depth of about 90mm (e.g. the main body length). In this way, when the smoking substitute device 201 is inserted into the cavity, the engagement portion 217 end of the main body 202 may be substantially flush with the cavity aperture. As such, the consumable 203 may be inserted into the main body 202 when the main body 202 is received within the cavity such that part of the consumable 203 is substantially proud of the charging device 104. The consumable 203 may have a total length of about 45mm but, when inserted into the main body 202, the consumable 203 may only protrude about 20mm beyond the housing 102. As such, when the smoking substitute device 201 is inserted into the holder 106, the consumable 203 may protrude about 20mm beyond the charging device 104. In this way, the smoking substitute device 201 may be used to generate vapour whilst engaged with the charging device 104. Alternatively, a depth of the cavity may be slightly less than a length of the main body 202 such that a portion of the main body 202 protrudes from and above the aperture 108 when it is connected in the cavity for charging. For example, the amount of protrusion may be between 9mm and 2mm, and preferably between 7mm and 3mm, and more preferably between 5mm and 4mm. Alternatively, the amount of protrusion may be about 3mm. In this way, a user is able to grab hold of the protruding portion of the main body 202 in order to remove it from the cavity. This may be particularly advantageous if no consumable 203 is connected to the main body 202.

The connection interface 130 may be positioned in a base portion of the cavity, for example, on or proximal to the base wall. Specifically, the connection interfaces 130 may be fixed to the base wall and may protrude at least partially into the cavity void. The connection interface 130 may be one part of a USB connection, for example, a USB-C plug or a micro USB plug. That is, the connection interface 130 may be one part of a two-part symmetrical connection (i.e. USB-C) or be one part of a two-part asymmetrical connection (i.e. micro-USB, Type-A, Type-B or Type-AB USB connectors). Charging pins, which are configured to contact corresponding contact pads (e.g. 214b and 214c) may also constitute either a two-part asymmetric or a two-part symmetric connection (i.e. a first part includes the two pins and the second part includes the two pads).

It is to be understood that a two-part *asymmetric* electrical connection is considered to be a two-part electrical connection between first and second asymmetric electrical connectors. These first and second connectors are asymmetric in the sense that they can only be mechanically and electrically connected together (i.e. engaged) in only one way or orientation. For example, a specific part (e.g. a top) of the first connector must be aligned with a specific part (e.g. a top) of the second connector before the two connectors can be engaged together to form a mechanical and electrical connection. That is, the two connectors cannot be engaged together to form the mechanical and electrical connection if these two specific parts are not aligned.

On the other hand, a two-part *symmetric* electrical connector is considered to be a two-part electrical connection between first and second connectors that can be mechanically and electrically connected together (i.e. engaged) in either or any way or orientation. For example, a top or bottom of the first connector may be aligned with either a top or bottom of the second connector for the two connectors can be engaged together to form a mechanical and electrical connection.

The charging device 104 includes control circuitry 112 which is operable to control charging of the second battery. It is to be understood that the control circuitry 112, the connection interface 130, and the battery provide a charging assembly of the charging device.

The charging device 104 may include a cable (not shown) which serves to removably connect the charging device 104 to an external power source (not shown). When present, the cable is removably connected to the control circuitry 112, for example, via a connection port which may be disposed on an outer surface of the housing 102 and electrically coupled to the control circuitry 112. For example, the connection port may be a USB connector, such as, a female USB socket. Accordingly, a first end of the cable may terminate in a cooperating connector, such as, a male USB plug. Further, a second end of the cable may terminate in a connector for connecting the cable to an external power source, e.g. to a computer or mains supply. That is, the second end may also terminate in a USB connector, such as, a male USB plug. Although in the present example the cable is presented as having a USB connector, other types of connectors may also be used, depending upon the type of power source used. Also, it is to be understood that the connection port may form part of the charging assembly of the charging device.

In this manner, the cable may be removably plugged into an external power source and the charging device 104 to provide power to the control circuitry 112 which can be used to charge the battery, for example, when the charge of battery has been depleted from charging a smoking substitute device. In some other examples, the control circuitry 112 may include electrical components which are arranged to convert a voltage and/or current provided by the cable to a desired level, to ensure that a desired power level may be delivered to the battery.

The charging device 104 may also include a charge indicator (not shown) in the form of an indicator light on an outer surface of the housing 102. The indicator light serves to indicate a charging status of the smoking substitute device when it is plugged into the charging device 104, i.e. whether the smoking substitute device is charging, whether it is charged. Also, the indicator light may indicate an amount of charge in the smoking substitute device (e.g. <20%, 21%-50%, 51%-99% and 100%). The indicator light may be arranged to indicate the charging status and charge amount in various manners, e.g. via a colour of the indicator light and/or via a blinking pattern of the indicator light. The indicator light (or a second indicator light) may/can provide an indication of a charging status and/or charge amount of the charging device, in a similar manner. For example, a first indicator light may indicate the charge status and/or charge amount of the smoking substitute device and be positioned near the aperture, whereas a second indicator light may indicate the charge status and/or charge amount of the charging device and be positioned near the connection port.

The charging device 104 comprises a cover 110 which is moveably attached to the housing 102. The cover 110 is movable between a closed configuration (shown in Figure 2A) and an open configuration (shown in Figure 2B). In the closed configuration the cover 110 covers the aperture of the holder 106. The cover 110 forms an enclosure, or an enclosed space. The enclosure can contain the smoking substitute device 201 (e.g. the main body 202 with or without the consumable 203). As such, the enclosure may cover all sides of the smoking substitute device 201 in the closed configuration. The enclosure surrounds the smoking substitute device 201 such that the smoking substitute device 201 (and particularly its mouthpiece) is prevented from becoming dirty or from attracting dirt, i.e. to improve hygiene. Also, the enclosure prevents the smoking substitute device 201 from damage, and prevents the smoking substitute device 201 from falling out of the holder 106 and becoming disconnected from charging. In the open configuration the cover 110 is spaced from the aperture 108 to permit insertion/removal of the smoking substitute device 201 into/out of the holder 106.

In the embodiment of Figure 2A, a top surface 110A of the cover 110 lies parallel to and above a top surface 111 of the housing 102 in the closed configuration. The side surface 110B of the cover 110, and the front and rear surfaces of the cover 110 lie in the same plane as the respective surfaces of the housing 102 in the closed configuration. In the open configuration, the top surface 111 (Figure 2B) of the housing 102 is exposed to reveal the holder 106. The cover 110 defines a cavity which can receive part of a smoking substitute device 201 (e.g. a top portion of the main body 202 and/or a top portion of the consumable 203) when the cover 110 is in the closed configuration and the smoking substitute device is received in the holder 106.

As seen on Figure 2A, the cover 110 is attached to the housing 102 by a hinge 120. In the embodiment of Figure 2A the hinge is positioned at the seam between the housing 102 and the cover 110. Other positions along the side face are possible. The cover 110 is pivotable about the hinge between the closed configuration and the open configuration.

In some embodiments, the charging device 104 is provided with at least one magnetic coupling between the housing 102 and the cover 110. The magnetic coupling is operable to hold the cover 110 in the closed configuration. There are various ways of implementing a magnetic coupling. One possible way is to provide a magnet on the housing 102 and an element of ferrous material (e.g. steel) on the cover 110. Another possible way is to provide a magnet on the cover 110 and an element of ferrous material (e.g. steel) on the housing 102. Another possible way is to provide a first magnet on the housing 102 and a second magnet on the cover 110. The first magnet and the second magnet are arranged to attract, i.e. the first magnet has a north pole oriented outwardly and the second magnet has a south pole oriented outwardly such that, when the first magnet and the second magnet are brought together, they attract one another. It will be understood the attraction may also be achieved by the first magnet having a south pole oriented outwardly and the second magnet having a north pole oriented outwardly. The magnetic coupling 122, 123 may be positioned at an opposite side of the housing 102 to the hinge 120.

Additionally or alternatively, the charging device 104 is provided with at least one mechanical coupling between the housing 102 and the cover 110. In a similar way to the magnetic coupling the mechanical coupling is operable to hold the cover 110 in the closed configuration. The mechanical coupling may be positioned at an opposite side of the housing 102 to the hinge 120. There are various ways for implementing a mechanical coupling. For example, a resiliently biased arm may be positioned on one of the housing 102 and the cover 110, and a cooperating retention feature may be positioned on the other of the housing 102 and the cover 110.

In the above-described embodiments, the charging device 104 is shown and described as being substantially rectangular. However, it is to be understood that in some other embodiments, the shape of the charging device 104 may vary provided that it can still contain the above-described components and perform the above-described functions. For example, the charging case may be rectangular but have curved edges. Also, the charging case may have a substantially oval or truncated-oval cross-section.

A cross-section view of the charging device 104 is shown in Fig. 3, showing the holder 106, which is a cavity or recess in the housing 102. As discussed above, the holder 106 has an opening at its top end through which a smoking substitute device 201 is inserted into the holder 106, and at a bottom end of the holder 106 has a connection interface 130 (for example in the form of charging pins) which is connected to control circuitry 112.

It will be appreciated that the holder 106 and the housing 102 of the charging device 104 are each curved along their longitudinal axes. In particular, the curved holder 106 conforms to the shape of the smoking substitute device 201, and also helps to ensure that the smoking substitute device 201 does not fall out of the holder 106 while charging of the smoking substitute device 201 is taking place. The curvature of the holder 106 provides additional frictional engagement with the smoking substitute device 201 at regions 108a and 108b, as circled in Fig. 3, which helps to keep the smoking substitute device 201 within the holder 106 when the charging device is in use. In some examples, the holder 106 may comprise an anti-slip coating at regions 108a and 108b to further increase friction between the holder 106 and the smoking substitute device 201. For example, the anti-slip coating may be a rubber coating, or a high-friction paint. In some embodiments, and anti-slip coating may extend over substantially all of the interior surface of the holder 106.

The housing 102 is also curved along its longitudinal axis, which provides a tactile and visual indicator to a user demonstrating the curvature of the holder 106, and thus ensuring that a user is able to correctly insert the smoking substitute device 201 into the charging device 104. The shape of the housing 102 is also ergonomic, and haptically pleasing for a user to hold. In some embodiments, the curvature of the housing 102 may match the curvature of the holder 106. The cover 110 has a curvature which corresponds to that of the housing 102 to provide a pleasing design. A radius of curvature of the holder 106 (and, in some examples, also of the housing 102) may be greater than 900 mm and less than 2000 mm, for example. It has been found that a radius of curvature in this range is particularly ergonomic, as well as providing the benefits related to ensuring that the smoking substitute device 201 stays within the holder 106.

Although not shown in Fig. 3, the holder 106 has a cross-sectional shape perpendicular to its longitudinal axis which is similar to that of the smoking substitute device 201, in particular a generally oval cross-section. In this way, in combination with the curvature of the holder 106, the holder 106 is adapted to ensure that the smoking substitute device 201 may only be inserted in a single orientation and, when inserted, does not become disconnected from the connection interface 130 (e.g. by inhibiting movement of the smoking substitute device about its longitudinal axis).

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A charging device for charging a smoking substitute device, the charging device comprising:
a housing having a holder for receiving a smoking substitute device; and
a charging assembly for charging the smoking substitute device, the charging assembly including a connection interface arranged for connection to the smoking substitute device when the smoking substitute device is received in the holder,
wherein the holder is curved along its longitudinal axis.

2. The charging device of claim 1, wherein the holder is an elongate tubular cavity in the housing.

3. The charging device of claim 1 or claim 2, wherein the housing is curved along its longitudinal axis.

4. The charging device of claim 3, wherein the curvature of the housing matches the curvature of the holder.

5. The charging device of any one of the preceding claims, further comprising a cover moveably attached to the housing and movable between a closed configuration, in which the cover covers an opening of the holder to form an enclosure around the smoking substitute device when the smoking substitute device is received in the holder, and an open configuration, in which the cover is spaced away from the opening to permit insertion or removal of a smoking substitute device into or out of the holder.

6. The charging device of claim 5 comprising at least one magnetic coupling between the housing and the cover which is operable to hold the cover in the closed configuration.

7. The charging device of claim 5, comprising at least one mechanical coupling between the housing and the cover which is operable to hold the cover in the closed configuration.

8. The charging device of any one of the preceding claims, wherein the connection interface comprises a pair of charging pins for delivering electricity to a smoking substitute device.

9. The charging device of any one of the preceding claims, wherein at least a portion of an interior surface of the holder has an anti-slip coating.

10. The charging device of any one of the preceding claims, wherein a radius of curvature of the holder is greater than 900 mm.

11. The charging device of any one of the preceding claims, wherein the holder has a generally oval cross-sectional shape perpendicular to the longitudinal axis.

12. The charging device of any one of the preceding claims, wherein the charging device is a portable charging case.

13. A smoking substitute kit comprising:
a charging device according to any one of the preceding claims; and
a smoking substitute device.

14. The smoking substitute kit of claim 12, wherein the smoking substitute device has a curvature along its longitudinal axis matching the curvature of the holder.

15. The smoking substitute kit of claim 12 or claim 13, wherein the smoking substitute device is longer than the holder such that, when the smoking substitute device is inserted into the holder, a portion of the smoking substitute device protrudes from the charging device, and wherein the smoking substitute device is operable for vapour generation when the smoking substitute device is inserted into the holder.
